# EUROPEAN PATENT APPLICATION

(11) **EP 4 760 572 A1**
(43) Date of publication of application: **17.06.2026**
(21) Application number: 25218665.5
(22) Date of filing: 26.11.2025
(51) Int. Cl.: G06F 21/60, G06F 12/14, G06F 21/70, G06F 21/71, G06F 21/78

(54) **DSSAD DATA STORING SYSTEM AND METHOD**

(30) Priority: 10.12.2024 KR 20240182223
(71) Applicant: Hyundai Motor Company, Seoul 06797 (KR); Kia Corporation, Seoul 06797 (KR)
(72) Inventor: HAN, Jang Soon, 18280 Hwaseong-si, Gyeonggi-do (KR); JEON, Sanghyun, 18280 Hwaseong-si, Gyeonggi-do (KR)
(74) Representative: Viering, Jentschura & Partner mbB Patent- und Rechtsanwälte

(57) **Abstract**

A DSSAD data storing system may include a Data Storage System for Automated Driving Vehicles (DSSAD) data storage device and a DSSAD data extraction device is provided, and the DSSAD data storage device may include a hardware security module (HSM) configured to perform data encryption, a dynamic random-access memory (DRAM) where a DSSAD data is stored, a processor configured to read the DSSAD data from the DRAM in response to a trigger signal and provide the read data to the HSM, and a flash memory configured to store a DSSAD encryption data encrypted by the HSM.

## Description

### CROSS-REFERENCE TO RELATED APPLICATION

This application claims priority to and the benefit of Korean Patent Application No. 10-2024-0182223 filed with the Korean Intellectual Property Office on December 10, 2024, the entire contents of which is incorporated herein by reference.

### TECHNICAL FIELD

The present disclosure relates to a Data Storage System for Automated Driving Vehicles (DSSAD) data storing system and method.

### BACKGROUND

The matters described in this Background section are only for enhancement of understanding of the background of the disclosure, and should not be taken as acknowledgment that they correspond to prior art already known to those skilled in the art.

The Data Storage System for Automated Driving Vehicles (DSSAD), which is a data storing system for an autonomous vehicle, may be an essential element for meeting legal and technical requirements. However, there is a need to minimize the capacity of a flash memory storing DSSAD data to reduce, for example, computing resources associated with the DDSAD (e.g., associated with the operation of a data storing system for an autonomous vehicle) . For this purpose, a minimized data structure that can efficiently manage the DSSAD data may be useful. As an example, under the Automated Lane Keeping System (ALKS) regulation UNECE R-157, DSSAD data storage may need to comply with the cybersecurity regulations defined in UNECE R-155. Additionally, a response system that can flexibly add or delete DSSAD data storage items through over-the-air (OTA) updates when laws and regulations of each country are revised may be useful. In addition, when laws are revised, the equipment that extracts DSSAD data may be designed to respond to existing systems without changes to hardware or software.

### SUMMARY

In one or more aspects, the present disclosure may provide a Data Storage System for Automated Driving Vehicles (DSSAD) data storing, and a system and method that may flexibly respond to changes in regulations while minimizing storage capacity.

A data storage system for automated driving vehicles (DSSAD) data storing system may include a DSSAD data storage device, wherein the DSSAD data storage device may include a hardware security processor configured to perform data encryption on DSSAD data, wherein the DSSAD data comprises data associated with driving of a vehicle, a dynamic random-access memory (DRAM) configured to store the DSSAD data, a processor that may read the DSSAD data from the DRAM in response to a trigger signal, and provide the read DSSAD data to the hardware security processor by sending commands to the DRAM, that when received by the DRAM, may cause the DRAM to send the read DSSAD data to the hardware security processor, and a flash memory that may store a DSSAD encryption data encrypted by the hardware security processor, wherein a first data storage region and a second data storage region are defined on the flash memory, wherein the processor is further configured to store a first DSSAD encryption data among the DSSAD encryption data in the first data storage region, and store a second DSSAD encryption data among the DSSAD encryption data in the second data storage region, and wherein, in the second DSSAD encryption data, an attribute of data field in which data regarding driving information of an autonomous vehicle is stored is different from an attribute of the data field of the first DSSAD encryption data.

The processor may be further configured to cause the flash memory to store, on the flash memory, first flag data that may include information on the second DSSAD encryption data between the first data storage region and the second data storage region.

The first flag data may include a value regarding a data size attribute with respect to a data field of the second DSSAD encryption data.

The first flag data further may include a value regarding signal name and value matching information of the data stored in the data field of the second DSSAD encryption data.

The DSSAD data storing system may further include a third data storage region that may be defined on the flash memory, and third DSSAD encryption data among the DSSAD encryption data that may be stored in the third data storage region, and the attribute of data field in the third DSSAD encryption data is different from the attribute of the data field of the second DSSAD encryption data.

On the flash memory, second flag data may include information on the third DSSAD encryption data is stored between the second data storage region and the third data storage region.

The processor may be configured to receive new DSSAD data through an over-the-air (OTA) and provide the received new DSSAD data to the hardware security processor, and the hardware security processor may be configured to encrypt the new DSSAD data to store new DSSAD encryption data in the flash memory.

The attribute of the data field of the new DSSAD encryption data may be different from the attribute of data field of DSSAD encryption data previously stored in the flash memory, flag data may include information on the new DSSAD encryption data that may be recorded before the new DSSAD encryption data is recorded in the flash memory.

The DSSAD data storage system may further include a DSSAD data extraction device that may be configured to receive the DSSAD encryption data from the DSSAD data storage device and perform decryption on the received DSSAD encryption data, to provide a DSSAD decryption data to an external device.

The DSSAD decryption data may include first DSSAD decryption data formed by decrypting the first DSSAD encryption data and second DSSAD decryption data formed by decrypting the second DSSAD encryption data, and the DSSAD data extraction device may be configured to provide the first flag data together with the second DSSAD decryption data to the external device, so as to enable the external device to use the first flag data for generating a DSSAD report.

An apparatus for a vehicle, the apparatus including a data storage system for automated driving vehicles (DSSAD) data storage device, which may include a flash memory, a hardware security processor, a dynamic random-access memory (DRAM), and a processor, wherein the DSSAD storage device may be configured to receive a trigger signal, read, based on receiving the trigger signal, DSSAD data that is stored at the DRAM, provide the read DSSAD data to the hardware security processor by sending commands to the DRAM, that when received by the DRAM, may cause the DRAM to send the read DSSAD data to the hardware security processor, encrypt the read DSSAD data to create a DSSAD encryption data, store first DSSAD encryption data of the DSSAD encryption data at a first data storage region of the flash memory, wherein the first DSSAD encryption data may include a first attribute associated with first driving information of an autonomous vehicle, store second DSSAD encryption data of the DSSAD encryption data at a second data storage region of the flash memory, wherein the second DSSAD encryption data may include a second attribute associated with second driving information of the autonomous vehicle, and store flag data between the first data storage region and the second data storage region, wherein the flag data comprises information may be associated with the second DSSAD encryption data, and wherein the flag data comprises a value regarding a data size attribute may be associated with a data field of the second DSSAD encryption data.

A data storage system for automated driving vehicles (DSSAD) data storing method performed by a DSSAD data storage device may include a processor, a dynamic random-access memory (DRAM), a flash memory and a hardware security processor, the DSSAD data storing method may include storing DSSAD data in the DRAM, wherein the DSSAD data may include data associated with driving of a vehicle, reading, by the processor, the DSSAD data from the DRAM in response to a trigger signal and providing the read data to the hardware security processor, performing, through the HSM, encryption on the DSSAD data to generate DSSAD encryption data, and storing the DSSAD encryption data in the flash memory, wherein a first data storage region and a second data storage region may be defined on the flash memory; wherein the storing the DSSAD data may include storing first DSSAD encryption data among the DSSAD encryption data in the first data storage region, and storing second DSSAD encryption data among the DSSAD encryption data in the second data storage region; and wherein, in the second DSSAD encryption data, an attribute of data field in which data regarding driving information of an autonomous vehicle is stored may be different from an attribute of the data field of the first DSSAD encryption data.

The method may further include storing a first flag data that may include information on the second DSSAD encryption data between the first data storage region and the second data storage region, on the flash memory.

The first flag data may include a value regarding a data size attribute with respect to a data field of the second DSSAD encryption data.

The first flag data further comprises a value regarding signal name and value matching information of the data stored in the data field of the second DSSAD encryption data.

A third data storage region may additionally be defined on the flash memory, a third DSSAD encryption data among the DSSAD encryption data may be stored in the third data storage region, and the attribute of data field in the third DSSAD encryption data may be different from the attribute of the data field of the second DSSAD encryption data.

The method may further include storing a second flag data that may include information on the third DSSAD encryption data between the second data storage region and the third data storage region, on the flash memory.

The method may further include receiving a new DSSAD data through an over-the-air (OTA) and providing the received new DSSAD data to the HSM, and encrypting the new DSSAD data through the HSM to store a new DSSAD encryption data in the flash memory, wherein, based on the attribute of the data field of the new DSSAD encryption data being different from the attribute of data field of a DSSAD encryption data previously stored in the flash memory, recording a flag data comprising information on the new DSSAD encryption data before recording the new DSSAD encryption data in the flash memory.

The method may further include receiving, by a DSSAD data extraction device, the DSSAD encryption data from the DSSAD data storage device and perform decryption on the received data, and providing, by the DSSAD data extraction device, a DSSAD decryption data to an external device.

The DSSAD decryption data may include a first DSSAD decryption data formed by decrypting the first DSSAD encryption data and a second DSSAD decryption data formed by decrypting the second DSSAD encryption data, and the providing, by the DSSAD data extraction device, the DSSAD decryption data to the external device may include providing, by the DSSAD data extraction device, the first flag data together with the second DSSAD decryption data to the external device, so as to enable the external device to use the first flag data for generating DSSAD report.

The advantageous effects of the present disclosure are not limited to those described above; other advantageous effects of the present disclosure not mentioned above may be understood clearly by those skilled in the art from the descriptions given below.

### BRIEF DESCRIPTION OF THE DRAWINGS

FIG. 1 depicts an example of a Data Storage System for Automated Driving Vehicles (DSSAD) data storing system according to an aspect.
FIG. 2 to FIG. 3 depicts an example implementation example of a DSSAD data storing system according to an aspect.
FIG. 4 is a drawing for explaining a DSSAD data storing method according to an aspect.
FIG. 5 is a drawing for explaining a computing device according to an aspect.

### DETAILED DESCRIPTION

The present disclosure will be described more fully hereinafter with reference to the accompanying drawings, in which aspects of the disclosure are shown. As those skilled in the art would realize, the described aspects may be modified in various different ways, all without departing from the spirit or scope of the present disclosure. Accordingly, the drawings and description are to be regarded as illustrative in nature and not restrictive. Like reference numerals designate like elements throughout the specification.

Throughout the specification and claims, when a part "includes" a certain element, it means that other elements may be further included, rather than excluding other elements, unless otherwise stated. Terms including ordinal numbers such as first, second, and the like will be used only to describe various constituent elements, and are not to be interpreted as limiting these constituent elements. The terms are only used to differentiate one constituent element from other constituent elements.

In addition, terms such as "... part," "... portion," " ... er/or," or "module" disclosed in the present specification may mean a unit that may process at least one function or operation described in this specification, and this may be implemented by hardware, software, or a combination thereof.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., features associated with receiving, encrypting, storing, and/or otherwise updating driving information of an autonomous vehicle) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features associated with receiving, encrypting, storing, and/or otherwise updating driving information of an autonomous vehicle) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features associated with receiving, encrypting, storing, and/or otherwise updating driving information of an autonomous vehicle) described herein.

Minimum risk maneuver (MRM) operation(s) may also be controlled, for example, based on one or more features (e.g., features associated with receiving, encrypting, storing, and/or otherwise updating driving information of an autonomous vehicle) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features associated with receiving, encrypting, storing, and/or otherwise updating driving information of an autonomous vehicle) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features associated with receiving, encrypting, storing, and/or otherwise updating driving information of an autonomous vehicle) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

An autonomous driving level and/or autonomous driving activation/deactivation may also be controlled, for example, based on one or more features (e.g., features associated with receiving, encrypting, storing, and/or otherwise updating driving information of an autonomous vehicle) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents may not be displayed on a display of the vehicle.

In addition, according to embodiments described below, at least a partial configuration or function of a Data Storage System for Automated Driving Vehicles (DSSAD) data storing system and method may be implemented as a program or software, and the program or software may be stored in a computer-readable recording medium or storage medium.

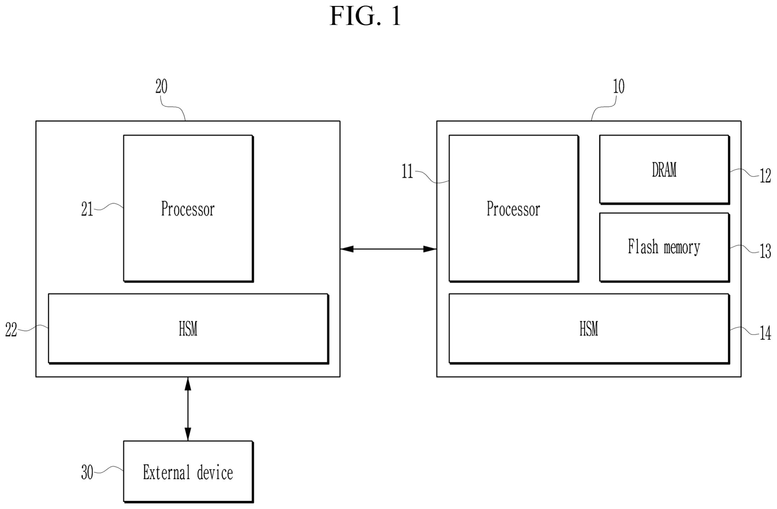

FIG. 1 depicts an example DSSAD data storing system according to an aspect.

Referring to FIG. 1, a DSSAD data storing system according to an aspect may include a DSSAD data storage device 10 and a DSSAD data extraction device 20.

The DSSAD data storage device 10 may be designed to flexibly add or delete data items according to legal requirements of various countries, and may include a processor 11, a dynamic random-access memory (DRAM) 12, a flash memory 13 and a hardware security processor (e.g., a cryptographic hardware processor, such as, for example, a hardware security module (HSM) 14).

For example, the processor 11 may read DSSAD data from the DRAM 12 in response to receiving a trigger signal and provide the read data to the HSM 14 by sending one or more commands to the DRAM 12, that when received by the DRAM 12, cause the DRAM 12 to send the read data to the HSM 14. In some cases, the trigger signal may include a DSSAD storing trigger signal. The DSSAD storing trigger signal may act as a trigger to direct the processor 11 to record data when major events such as occurrence of an accident, switching of control between the driver and the vehicle, or a failure of the autonomous driving system occurs, or may store vehicle status data at predetermined time intervals, or may store data when a specific condition such as vehicle speed violation, emergency braking, specific sensor data change or the like occurs. The HSM 14 may perform encryption and authentication work in order to maintain the security of the DSSAD data. In some cases, the HSM 14 may utilize symmetric encryption techniques (e.g., data encryption standard (DES), advanced encryption standard (AES), international data encryption algorithm (IDEA), or the like), asymmetric encryption techniques (e.g., Rivest Shamir Adleman (RSA), Elliptical Curve Cryptography, public key infrastructure (PKI), or the like) without departing from the scope of the disclosure. The encrypted DSSAD data may be stored in the flash memory 13 and protected from external attacks or data tempering. The DRAM 12 may be used as a temporary memory in the process of storing and reading data, thereby realizing technical benefits associated with improvements to computer technology (e.g., improving data processing speed). The flash memory 13 may store the DSSAD data for a long period of time and may utilize a data structure optimized for capacity reduction.

In some aspects, the encryption process performed by the HSM 14 may be performed as follows. First, the DSSAD event data (e.g., timestamp) at the time of an accident stored in DRAM 12 may be transferred to HSM 14 (by, e.g., processor 11 sending one or more commands to the DRAM 12, that when received, cause the DRAM 12 to send the DSSAD event data to the HSM 14). Second, the HSM 14 may encrypt the data using, for example, an AES-128 algorithm. Third, the HSM 14 may add a hash header by, for example, utilizing a Hash-based Message Authentication Code that uses an SHA-256 cryptographic hash function (HMAC-SHA256) method to prevent forgery Fourth, the encrypted data may be securely and safely stored in flash memory 13. In this manner, a multi-layer cryptographic security method may be used to improve the security associated with the encryption and storing of the DSSAD event data.

In some aspects, a plurality of data storage regions may be defined on the flash memory 13. For example, a first data storage region R1 and a second data storage region R2 may be defined on the flash memory 13. A first DSSAD encryption data among DSSAD encryption data may be stored in the first data storage region R1, and a second DSSAD encryption data among the DSSAD encryption data may be stored in the second data storage region R2. In some cases, the same encryption technique may be used to encrypt the first DSSAD encryption data and the second DSSAD encryption data. Alternatively, different encryption techniques may be used without departing from the scope of the disclosure.

Attributes of data fields stored in the plurality of data storage regions may be different from each other. For example, in the second DSSAD encryption data, the attribute of data field Data where data regarding driving information of an autonomous vehicle may be different from the attribute of the data field Data of the first DSSAD encryption data.

On the flash memory 13, a flag data may be additionally stored between the plurality of data storage regions. For example, on the flash memory 13, a first flag data F1 including information on the second DSSAD encryption data may be additionally stored between the first data storage region R1 and the second data storage region R2.

In some aspects, the first flag data F1 may include a value regarding a data size attribute with respect to the data field Data of the second DSSAD encryption data. In some embodiments, the first flag data F1 may further include a value regarding matching information of signal name and the value of the data stored in the data field Data of the second DSSAD encryption data.

In some aspects, a third data storage region R3 may be additionally defined on the flash memory 13, a third DSSAD encryption data among the DSSAD encryption data may be stored in the third data storage region R3, and the attribute of the data field Data in the third DSSAD encryption data may be different from the attribute of the data field Data of the second DSSAD encryption data.

On the flash memory 13, a second flag data F2 including information on the third DSSAD encryption data may be additionally stored between the second data storage region R2 and the third data storage region R3.

The processor 11 of the DSSAD data storage device 10 may receive the new DSSAD data through, for example, an over-the-air (OTA) technique and provide the received new DSSAD data to the HSM 14, and the HSM 14 may encrypt the new DSSAD data to store a new DSSAD encryption data in the flash memory 13.

In this case, when the attribute of the data field of the new DSSAD encryption data is different from the attribute of the data field the DSSAD encryption data previously stored in the flash memory 13, a flag data including information on the new DSSAD encryption data may be recorded beforehand before the new DSSAD encryption data is recorded in the flash memory 13.

Meanwhile, the data extraction device 20 may include a processor 21 and a HSM 22, receive the DSSAD encryption data from the DSSAD data storage device 10 and perform decryption on the received data, and provide a DSSAD decryption data to an external device 30. The external device 30 may generate a DSSAD report. Here, the DSSAD report may be a report generated based on data stored in the DSSAD of, for example, an autonomous vehicle, and may include an operation history of the vehicle, an event of the autonomous driving system, accident time point data, or the like.

In some aspects, the decryption process performed by the HSM 22 may be performed as follows. First, after performing a tempering inspection, the hash header may be deleted, the encrypted data may be decrypted, and the decrypted data may be transferred to the external device 30, for example, PC, through the processor 21.

In some aspects, the DSSAD decryption data may include a first DSSAD decryption data formed by decrypting the first DSSAD encryption data and a second DSSAD decryption data formed by decrypting the second DSSAD encryption data, and the DSSAD data extraction device 20 may provide the first flag data F1 together with the second DSSAD decryption data to the external device 30, so as to enable the external device 30 to use the first flag data F1 for generating the DSSAD report.

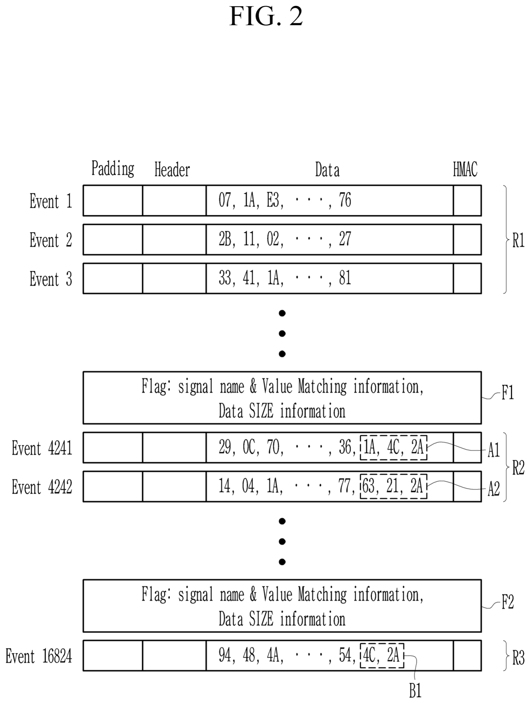

FIG. 2 to FIG. 3 depict an example implementation of the DSSAD data storing system according to an aspect.

Referring to FIG. 2, the DSSAD data structure may include a padding, a header, a data, and a hash-based message authentication code (HMAC). The padding may be an empty space added to align the length of data and align it to block units during the encryption process, and the header may be metainformation of the DSSAD data and may include key information such as the time of recording (timestamp), data type, identification number (ID), and the like. The data may include a core content that may be stored in the DSSAD, such as, for example, the vehicle's driving status, control switching records, accident information, and the HMAC may include an encrypted hash value to prevent tempering and verify integrity of the data.

In FIG. 2, the first data storage region R1, the second data storage region R2 and the third data storage region R3 may be defined in the flash memory 13. The first DSSAD encryption data among the DSSAD encryption data may be stored in the first data storage region R1, the second DSSAD encryption data among the DSSAD encryption data may be stored in the second data storage region R2, and the third DSSAD encryption data among the DSSAD encryption data may be stored in the third data storage region R3. Although FIG. 2 depicts three data storage regions (e.g., first data storage region R1, second data storage region R2, third data storage region R3), additional or fewer data storage regions may be defined and similarly used without departing from the scope of the disclosure.

In the second DSSAD encryption data, the attribute of the data field Data in which data regarding driving information of the autonomous vehicle is stored may be different from the attribute of the data field Data of the first DSSAD encryption data. In the case of the second DSSAD encryption data, data indicated as A1 and A2 are added, and these data may mean country, latitude, and longitude data. That is, in the case of the first DSSAD encryption data, the data field might not include country, latitude, and longitude data, but in the case of the second DSSAD encryption data, the data field may include country, latitude, and longitude data.

In this case, on the flash memory 13, the first flag data F1 including information on the second DSSAD encryption data may be additionally stored between the first data storage region R1 and the second data storage region R2. Here, information on the second DSSAD encryption data may include signal name and value matching information regarding country, latitude, and longitude data, and data size information.

In the third DSSAD encryption data, the attribute of the data field Data in which data regarding driving information of the autonomous vehicle is stored may be different from the attribute of the data field Data of the second DSSAD encryption data. In the case of the third DSSAD encryption data, some of the data is excluded as indicated by B1, and these data may only mean latitude and longitude data excluding country. That is, for the second DSSAD encryption data, the data field may include all of country, latitude, and longitude data, but for the third DSSAD encryption data, the data field may only include latitude and longitude data.

In this case, on the flash memory 13, between the second flag data F2 including information on the third DSSAD encryption data may be additionally stored in the second data storage region R2 and the third data storage region R3. Here, information on the third DSSAD encryption data may include signal name and value matching information regarding latitude and longitude data, and data size information.

That is, when storing the DSSAD data in the flash memory 13, as the flag data representing the DSSAD data storage information is added, the flag data may be utilized through, for example, an OTA update when DSSAD laws are revised in each country, and data size, signal name, and value matching information are included, thereby enabling flexible response to revision of laws without a hardware and software change of the DSSAD extraction equipment. In this manner, technical benefits associated with improvements to computer technology (e.g., improvements to efficiently identifying and updating data, minimizing computing resources when updates occur, etc) may be realized.

In some cases, one or more flags as described herein may be configured to be generated and/or adjusted to increase DSSAD storage efficiencies (e.g., reduce the DSSAD data size), for example, based on different autonomous driving data control configurations (e.g., different autonomous driving levels, different DSSAD data storage regulations, updated DSSAD data storage regulations, etc.) without system configuration changes (e.g., hardware and/or software configurations) of one or more DSSAD data storage devices of the DSSAD system. A DSSAD report generation may be efficiently executed using the configurations described herein.

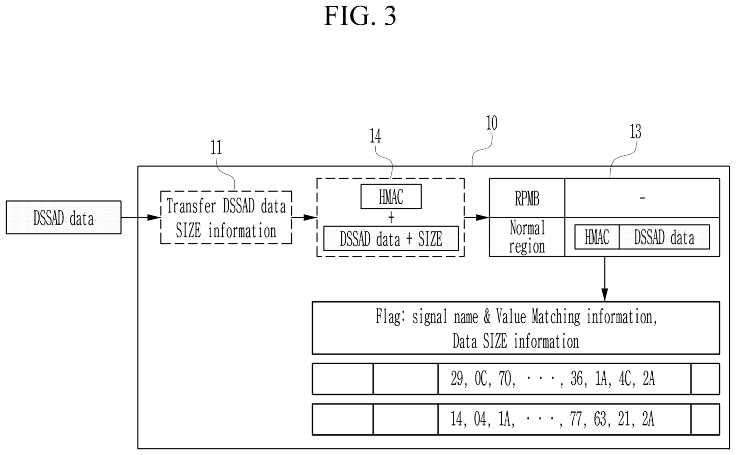

Referring to FIG. 3, when the DSSAD data storage item is changed through the OTA, change flag information may be added before storing the changed data. When generating the DSSAD report, the change flag information may be placed at top of the DSSAD data before the change, and may be transferred to the DSSAD extraction equipment. Through this, the extraction equipment may recognize the changed data structure, and may perform its functions normally without the HMAC mismatch errors when checking for data tampering, thereby improving computer technology by reducing mismatch errors associated with data extraction techniques.

Conventionally, data was stored by generating a HMAC header based on a fixed data size. However, when the DSSAD regulations are revised and the storage items were added or reduced through OTA, the HMAC header may be changed due to the changed data structure, and accordingly, HMAC mismatch errors occurred while the DSSAD extraction equipment checks for the data tempering. According to the aspects described herein, such problems may be solved, while also minimizing computing resources.

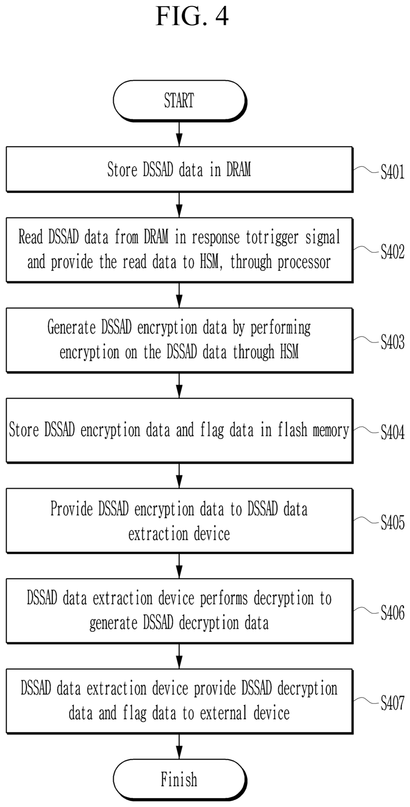

FIG. 4 depicts an example DSSAD data storing method according to an aspect.

Referring to FIG. 4, the DSSAD data storing method according to an aspect may include a step S401 of storing the DSSAD data in the DRAM, a step S402 of reading, through the processor, the DSSAD data from the DRAM in response to trigger signal and provide the read data to HSM, a step S403 of generating the DSSAD encryption data by performing encryption on the DSSAD data through HSM, a step S404 of storing the DSSAD encryption data and the flag data in the flash memory, a step S405 of providing the DSSAD encryption data to the DSSAD data extraction device, a step S406 of performing, by the DSSAD data extraction device, decryption to generate the DSSAD decryption data, and a step S407 of providing, by the DSSAD data extraction device, the DSSAD decryption data and the flag data to the external device.

For more detailed information about the above method, reference can be made to the description of the embodiments described in this specification, so a redundant description is omitted here.

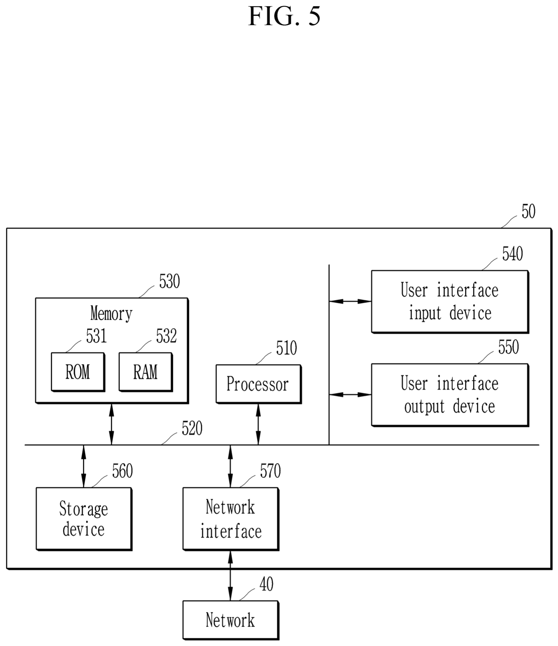

FIG. 5 depicts an example computing device according to an exemplary embodiment.

Referring to FIG. 5, the DSSAD data storing method and apparatus according to one or more aspects may be implemented by using a computing device 50. The computing device 50 may be implemented as various types of electronic devices, servers or similar devices, and its function may be implemented through a combination of software and hardware.

The computing device 50 may include at least one of a processor 510, a memory 530, a user interface input device 540, a user interface output device 550 and a storage device 560 that may communicate with each other through a bus 520. The computing device 50 may include a network interface 570 electrically connected to a network 40. The network interface 570 may send or receive signals to and from other entities through the network 40.

The processor 510 may be implemented as various types of calculation devices, such as a microcontroller unit (MCU), an application processor (AP), a central processing unit (CPU), a graphic processing unit (GPU), a neural processing unit (NPU), a quantum processing unit (QPU), etc. The processor 510 may also be a semiconductor device that executes instructions stored in the memory 530 or the storage device 560 and may play a key role in the system. Program codes and data stored in the memory 530 or the storage device 560 instruct the processor 510 to perform specific tasks, thereby enabling the overall operation of the system. In this way, the processor 510 may implement the various functions and methods described above with reference to FIG. 1 to FIG. 4.

The memory 530 and storage device 560 may include various forms of volatile or non-volatile storage medium for storing and accessing data of the system. For example, the memory 530 may include a read-only memory (ROM) 531 and a random-access memory (RAM) 532. In some aspects, the memory 530 may be built into the processor 510, in which case data transmission speeds between the memory 530 and the processor 510 may be very fast. In some other aspects, the memory 530 may be disposed external to the processor 510, in which case the memory 530 may be connected to the processor 510 through various data buses or interfaces. This connection may be made through a variety of known means, for example, a peripheral component interconnect express (PCIe) interface for high-speed data transmission or a memory controller.

In some aspects, at least some of the components or functions of the DSSAD data storing method and apparatus according to the aspects described herein may be implemented as a program or software executed on the computing device 50, and the program or software may be stored on a computer-readable recording medium or storage medium. Specifically, according to an aspect, a computer-readable recording medium or storage medium may record a program for executing steps included in an implementation of the DSSAD data storing method and apparatus according to one or more aspects, on a computer including the processor 510 executing a program or instructions stored in the memory 530 or the storage device 560.

In some aspects, at least some components or functions of the DSSAD data storing method and apparatus according to the aspects may be implemented using hardware or circuitry of the computing device 50, or implemented using a separate hardware or circuitry that may be electrically connected to the computing device 50.

According to an aspect, it is possible to respond flexibly through OTA updates when the DSSAD regulations of each country are revised. This may allow for efficiently utilizing computing resources by minimizing the DSSAD data storage structure and reducing use of small-capacity flash memory. In addition, it can effectively respond to country-specific legal requirements without changing the hardware and software of the DSSAD data extraction equipment.

According to one or more aspects, a DSSAD data storing system may include a Data Storage System for Automated Driving Vehicles (DSSAD) data storage device and a DSSAD data extraction device is provided, and the DSSAD data storage device may include a hardware security module (HSM) configured to perform data encryption, a dynamic random-access memory (DRAM) where a DSSAD data is stored, a processor configured to read the DSSAD data from the DRAM in response to a trigger signal and provide the read data to the HSM, and a flash memory configured to store a DSSAD encryption data encrypted by the HSM, where a first data storage region and a second data storage region are defined on the flash memory, where a first DSSAD encryption data among the DSSAD encryption data is stored in the first data storage region, and a second DSSAD encryption data among the DSSAD encryption data is stored in the second data storage region, and where, in the second DSSAD encryption data, an attribute of data field in which data regarding driving information of an autonomous vehicle is stored is different from an attribute of the data field of the first DSSAD encryption data.

On the flash memory, a first flag data including information on the second DSSAD encryption data may be additionally stored between the first data storage region and the second data storage region.

The first flag data may include a value regarding a data size attribute with respect to a data field of the second DSSAD encryption data.

The first flag data may further include a value regarding signal name and value matching information of the data stored in the data field of the second DSSAD encryption data.

A third data storage region may be additionally defined on the flash memory, a third DSSAD encryption data among the DSSAD encryption data may be stored in the third data storage region, and the attribute of data field in the third DSSAD encryption data may be different from the attribute of the data field of the second DSSAD encryption data.

On the flash memory, a second flag data including information on the third DSSAD encryption data may be additionally stored between the second data storage region and the third data storage region.

The processor may be configured to receive a new DSSAD data through an over-the-air (OTA) and provide the received new DSSAD data to the HSM, and the HSM may be configured to encrypt the new DSSAD data to store a new DSSAD encryption data in the flash memory.

When the attribute of the data field of the new DSSAD encryption data is different from the attribute of data field of a DSSAD encryption data previously stored in the flash memory, a flag data including information on the new DSSAD encryption data may be recorded beforehand before the new DSSAD encryption data is recorded in the flash memory.

The DSSAD data extraction device may be configured to receive the DSSAD encryption data from the DSSAD data storage device and perform decryption on the received data, to provide a DSSAD decryption data to an external device.

The DSSAD decryption data may include a first DSSAD decryption data formed by decrypting the first DSSAD encryption data and a second DSSAD decryption data formed by decrypting the second DSSAD encryption data, and the DSSAD data extraction device may be configured to provide the first flag data together with the second DSSAD decryption data to the external device, so as to enable the external device to use the first flag data for generating DSSAD report.

A DSSAD data storing method may be performed by a Data Storage System for Automated Driving Vehicles (DSSAD) data storage device including a processor, a dynamic random-access memory (DRAM), a flash memory and a hardware security module (HSM), and the DSSAD data storing method may include storing DSSAD data in the DRAM, reading, through the processor, the DSSAD data from the DRAM in response to a trigger signal and providing the read data to the HSM, performing, through the HSM, encryption on the DSSAD data to generate a DSSAD encryption data, storing the DSSAD encryption data in the flash memory, where a first data storage region and a second data storage region are defined on the flash memory, where a first DSSAD encryption data among the DSSAD encryption data may be stored in the first data storage region, and a second DSSAD encryption data among the DSSAD encryption data may be stored in the second data storage region, and where, in the second DSSAD encryption data, an attribute of data field in which data regarding driving information of an autonomous vehicle may be stored may be different from an attribute of the data field of the first DSSAD encryption data.

The DSSAD data storing method may further include additionally storing a first flag data including information on the second DSSAD encryption data between the first data storage region and the second data storage region, on the flash memory.

The first flag data may include a value regarding a data size attribute with respect to a data field of the second DSSAD encryption data.

The first flag data may further include a value regarding signal name and value matching information of the data stored in the data field of the second DSSAD encryption data.

A third data storage region may be additionally defined on the flash memory, a third DSSAD encryption data among the DSSAD encryption data may be stored in the third data storage region, and the attribute of data field in the third DSSAD encryption data may be different from the attribute of the data field of the second DSSAD encryption data.

The DSSAD data storing method may further include additionally storing a second flag data including information on the third DSSAD encryption data between the second data storage region and the third data storage region, on the flash memory.

The DSSAD data storing method may further include receiving a new DSSAD data through an over-the-air (OTA) and providing the received new DSSAD data to the HSM, and encrypting the new DSSAD data through the HSM to store a new DSSAD encryption data in the flash memory.

The DSSAD data storing method may further include, when the attribute of the data field of the new DSSAD encryption data may be different from the attribute of data field of a DSSAD encryption data previously stored in the flash memory, recording a flag data including information on the new DSSAD encryption data beforehand before recording the new DSSAD encryption data in the flash memory.

The DSSAD data storing method may further include receiving, by a DSSAD data extraction device, the DSSAD encryption data from the DSSAD data storage device and perform decryption on the received data, and providing, by the DSSAD data extraction device, a DSSAD decryption data to an external device.

The DSSAD decryption data may include a first DSSAD decryption data formed by decrypting the first DSSAD encryption data and a second DSSAD decryption data formed by decrypting the second DSSAD encryption data, and the providing, by the DSSAD data extraction device, the DSSAD decryption data to the external device may include providing, by the DSSAD data extraction device, the first flag data together with the second DSSAD decryption data to the external device, so as to enable the external device to use the first flag data for generating DSSAD report.

While this disclosure has been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

## Claims

1. A data storage system for automated driving vehicles (DSSAD) data storing system comprising a DSSAD data storage device,
wherein the DSSAD data storage device comprises:
a hardware security processor configured to perform data encryption on DSSAD data, wherein the DSSAD data comprises data associated with driving of a vehicle;
a dynamic random-access memory (DRAM)configured to store the DSSAD data;
a processor configured to:
read the DSSAD data from the DRAM in response to a trigger signal; and
provide the read DSSAD data to the hardware security processor by sending a command to the DRAM, that when received by the DRAM, cause the DRAM to send the read DSSAD data to the hardware security processor; and
a flash memory configured to store a DSSAD encryption data encrypted by the hardware security processor,
wherein a first data storage region and a second data storage region are defined on the flash memory,
wherein the processor is further configured to store a first DSSAD encryption data among the DSSAD encryption data in the first data storage region, and store a second DSSAD encryption data among the DSSAD encryption data in the second data storage region, and
wherein, in the second DSSAD encryption data, an attribute of data field in which data regarding driving information of an autonomous vehicle is stored is different from an attribute of the data field of the first DSSAD encryption data.

2. The DSSAD data storing system of claim 1, wherein the processor is further configured to cause the flash memory to store, on the flash memory, a first flag data comprising information on the second DSSAD encryption data between the first data storage region and the second data storage region.

3. The DSSAD data storing system of claim 2, wherein the first flag data comprises a value regarding a data size attribute with respect to a data field of the second DSSAD encryption data, wherein, optionally, the first flag data further comprises a value regarding signal name and value matching information of the data stored in the data field of the second DSSAD encryption data.

4. The DSSAD data storing system of claim 2 or 3, wherein:
a third data storage region is defined on the flash memory;
third DSSAD encryption data among the DSSAD encryption data is stored in the third data storage region; and
the attribute of data field in the third DSSAD encryption data is different from the attribute of the data field of the second DSSAD encryption data.

5. The DSSAD data storing system of claim 4, wherein, on the flash memory, second flag data comprising information on the third DSSAD encryption data is stored between the second data storage region and the third data storage region.

6. The DSSAD data storing system of anyone of claims 1-5, wherein:
the processor is configured to receive new DSSAD data through an over-the-air (OTA) and provide the received new DSSAD data to the hardware security processor; and
the hardware security processor is configured to encrypt the new DSSAD data to store new DSSAD encryption data in the flash memory, wherein, optionally, when the attribute of the data field of the new DSSAD encryption data is different from the attribute of data field of DSSAD encryption data previously stored in the flash memory, a flag data comprising information on the new DSSAD encryption data is recorded before the new DSSAD encryption data is recorded in the flash memory.

7. The DSSAD data storing system of anyone of claims 1-6, wherein the DSSAD data storing system further comprises a DSSAD data extraction device, wherein the DSSAD data extraction device is configured to receive the DSSAD encryption data from the DSSAD data storage device and perform decryption on the received DSSAD encryption data, to provide a DSSAD decryption data to an external device.

8. The DSSAD data storing system of claim 7 provided that in combination with claim 2, wherein:
the DSSAD decryption data comprises first DSSAD decryption data formed by decrypting the first DSSAD encryption data and second DSSAD decryption data formed by decrypting the second DSSAD encryption data; and
the DSSAD data extraction device is configured to provide the first flag data together with the second DSSAD decryption data to the external device, so as to enable the external device to use the first flag data for generating a DSSAD report.

9. An apparatus for a vehicle, the apparatus comprising:
a data storage system for automated driving vehicles (DSSAD) data storage device, comprising a flash memory, a hardware security processor, a dynamic random-access memory (DRAM), and a processor, wherein the DSSAD storage device is configured to:
receive a trigger signal;
read, based on receiving the trigger signal, DSSAD data that is stored at the DRAM;
provide the read DSSAD data to the hardware security processor by sending a command to the DRAM, that when received by the DRAM, cause the DRAM to send the read DSSAD data to the hardware security processor;
encrypt the read DSSAD data to create DSSAD encryption data;
store first DSSAD encryption data of the DSSAD encryption data at a first data storage region of the flash memory, wherein the first DSSAD encryption data comprises a first attribute associated with first driving information of an autonomous vehicle;
store second DSSAD encryption data of the DSSAD encryption data at a second data storage region of the flash memory, wherein the second DSSAD encryption data comprises a second attribute associated with second driving information of the autonomous vehicle; and
store flag data between the first data storage region and the second data storage region, wherein the flag data comprises information associated with the second DSSAD encryption data, and wherein the flag data comprises a value regarding a data size attribute associated with a data field of the second DSSAD encryption data.

10. A data storage system for automated driving vehicles (DSSAD) data storing method performed by a DSSAD data storage device comprising a processor, a dynamic random-access memory (DRAM), a flash memory and a hardware security processor, the DSSAD data storing method comprising:
storing DSSAD data in the DRAM, wherein the DSSAD data comprises data associated with driving of a vehicle;
reading, by the processor, the DSSAD data from the DRAM in response to a trigger signal and providing the read data to the hardware security processor;
performing, by the hardware security processor, encryption on the DSSAD data to generate DSSAD encryption data; and
storing the DSSAD encryption data in the flash memory,
wherein a first data storage region and a second data storage region are defined on the flash memory;
wherein the storing the DSSAD data comprises storing first DSSAD encryption data among the DSSAD encryption data in the first data storage region, and storing second DSSAD encryption data among the DSSAD encryption data in the second data storage region; and
wherein, in the second DSSAD encryption data, an attribute of data field in which data regarding driving information of an autonomous vehicle is stored is different from an attribute of the data field of the first DSSAD encryption data.

11. The DSSAD data storing method of claim 10, further comprising storing first flag data comprising information on the second DSSAD encryption data between the first data storage region and the second data storage region, on the flash memory, wherein, optionally, the first flag data comprises a value regarding a data size attribute with respect to a data field of the second DSSAD encryption data, wherein, optionally, the first flag data further comprises a value regarding signal name and value matching information of the data stored in the data field of the second DSSAD encryption data.

12. The DSSAD data storing method of claim 11, wherein:
a third data storage region is defined on the flash memory;
third DSSAD encryption data among the DSSAD encryption data is stored in the third data storage region; and
the attribute of data field in the third DSSAD encryption data is different from the attribute of the data field of the second DSSAD encryption data, wherein, optionally, the DSSAD data storing method further comprises storing second flag data comprising information on the third DSSAD encryption data between the second data storage region and the third data storage region, on the flash memory.

13. The DSSAD data storing method of anyone of claims 10-12, further comprising:
receiving new DSSAD data through an over-the-air (OTA) and providing the received new DSSAD data to the hardware security processor; and
encrypting, by the hardware security processor, the new DSSAD data to store new DSSAD encryption data in the flash memory, wherein, based on the attribute of the data field of the new DSSAD encryption data being different from the attribute of data field of DSSAD encryption data previously stored in the flash memory, recording flag data comprising information on the new DSSAD encryption data before recording the new DSSAD encryption data in the flash memory.

14. The DSSAD data storing method of anyone of claims 10-13, further comprising:
receiving, by a DSSAD data extraction device, the DSSAD encryption data from the DSSAD data storage device and perform decryption on the received DSSAD encryption data; and
providing, by the DSSAD data extraction device, a DSSAD decryption data to an external device.

15. The DSSAD data storing method of claim 14, provided that in combination with claim 11, wherein:
the DSSAD decryption data comprises first DSSAD decryption data formed by decrypting the first DSSAD encryption data and second DSSAD decryption data formed by decrypting the second DSSAD encryption data; and
the providing, by the DSSAD data extraction device, the DSSAD decryption data to the external device comprises providing, by the DSSAD data extraction device, the first flag data together with the second DSSAD decryption data to the external device, so as to enable the external device to use the first flag data for generating DSSAD report.
